# EUROPEAN PATENT SPECIFICATION

(11) **EP 2 373 589 B1**
(45) Date of publication and mention of the grant of the patent: **29.03.2017**
(21) Application number: 09837997.7
(22) Date of filing: 18.12.2009
(51) Int. Cl.: C03B 37/08, C03B 37/095, C04B 35/457

(54) **BUSHING BLOCK**
DÜSENBLOCK
BLOC DE RONDELLE D'ÉCOULEMENT

(30) Priority: 18.12.2008 US 138860 P
(43) Date of publication of application: 12.10.2011
(73) Proprietor: Saint-Gobain Ceramics & Plastics, Inc., Worcester, MA 01615-0138 (US)
(72) Inventor: FOURCADE, Julien, P., Shrewsbury Massachusetts 01545 (US); CITTI, Olivier, Wellesley Massachusetts 02482 (US)
(74) Representative: Zimmermann & Partner Patentanwälte mbB
(86) International application number: PCT/US2009/068784
(87) International publication number: WO 2010/080627

(56) References cited:
- KR-A- 20060 117 316
- KR-A- 20070 015 212
- US-A- 2 244 777
- US-A- 2 256 033
- US-A- 4 161 396
- US-A- 4 957 525
- US-A1- 2006 179 886
- US-B1- 6 880 365

## Description

### TECHNICAL FIELD

The following is directed to bushing blocks, and particularly bushing blocks formed from tin oxide-based compositions.

### BACKGROUND ART

In typical glass fiber-forming operations, raw batch ingredients are melted and homogenized in a furnace and fed to a refractory-lined forehearth having one or more openings in its bottom surface. Each opening in the forehearth is fitted with an insulating refractory block, often times referred to as a flow block that has an opening or bore extending therethrough to permit flow of the molten glass through the flow block. A second refractory block, referred to as a bushing block, is placed under the flow block for receiving the molten glass from the flow block. One or more openings extend through the bushing block allowing molten glass to pass through the body of the bushing block to a bushing disposed under the bushing block. The bushing can have a plurality of apertures within it to receive molten glass from the bore of the bushing block. Continuous fibers are formed from the molten glass by attenuating streams of the molten material through the apertures in the bottom of the bushing.

The bushing is typically made of a refractory metal, such as platinum or a combination of platinum and rhodium, while the bushing block is typically made from a zirconia-based (i.e., those bodies containing zirconium oxide), zircon-based (i.e., those bodies containing zirconium silicate) or chromia-based ceramic material. The bushing block is particularly important component of the forehearth. The bushing block should have high integrity against thermal loads and chemical attack, particularly since replacement of the bushing block is a labor-intensive undertaking requiring cooling of the molten glass in the forehearth and affecting manufacturing for days or even a week.

In light of the above obstacles and concerns, the industry continues to demand improvements in bushing blocks.

US 2,244,777 A relates to refractory materials and articles capable of withstanding the corrosive action of molten glass. The refractory materials are primarily composed of tin oxide, and contain a small amount of a compound containing a metal of the group composed of cobalt, nickel, iron, copper, silver, gold, and manganese.

US 2,256,033 A relates to a method of making a refractory body, wherein a refractory batch primarily composed of tin oxide is molded, air-dried, and fired to a coherent porous mass, and subsequently impregnated with a solution consisting preferably of a salt of one of a metal of the group composed of cobalt, nickel, iron, copper, silver, gold, and manganese.

US 6,880,365 B1 relates to refractory materials based on tin oxide, which may include as minor constituents one or more of copper oxide, manganese oxide and antimony oxide.

### DISCLOSURE OF INVENTION

Subject matter of the present invention is a refractory article as defined in claim 1. The dependent claims relate to particular embodiments thereof.

According to the present invention, a refractory article includes a bushing block having a body comprising an opening extending through the body, wherein the bushing block is formed from a composition including a primary component comprising tin oxide, and at least one additive selected from the group of additives consisting of a sintering aid, a resistivity modifying species or a combination thereof. The composition further comprises a corrosion inhibitor selected from the group of oxides consisting of ZrO₂ and HfO₂ or a combination thereof.

According to a particular embodiment, the refractory article comprises not greater than about 1 wt% Cr₂O₃. The bushing block further includes a corrosion rate of not greater than about 2 E-5 Kg m⁻² s⁻¹ when exposed to molten glass at 1450°C for 90 hours. The bushing block body can have a thermal shock resistance of not less than about 60% based on a MOR value after heating to 1000°C and quenching as compared to an intrinsic MOR value measured at room temperature.

### BRIEF DESCRIPTION OF THE DRAWINGS

The present disclosure may be better understood, and its numerous features and advantages made apparent to those skilled in the art by referencing the accompanying drawings.
FIG. 1 includes a schematic of a direct melt fiber-forming process using a bushing block in accordance with an embodiment.
FIG. 2 includes a perspective view of a bushing block in accordance with an embodiment.

The use of the same reference symbols in different drawings indicates similar or identical items.

### DESCRIPTION OF THE PREFERRED EMBODIMENT(S)

The following disclosure is directed to a refractory article, and more particularly, a bushing block having a tin oxide-based composition for use in the forehearth of the glass furnaces between the flow block and the bushing. The flow block includes openings for exit of the molten glass from the glass tank within the forehearth. The molten glass flows through the flow block into the bushing block which has an opening for flow of molten glass therethrough. The bushing block is attached to a bushing, which is typically a refractory metal article, such as platinum, that has a plurality of holes extending through it for drawing strands or fibers of molten glass therefrom. The bushing block serves as a spacer between the feeder and the bushing, and is a semi-replaceable part, typically being replaced anywhere from about 6 months to every two years, depending upon certain characteristics of the material.

The bushing blocks described herein are tin oxide-based ceramic bodies formed from a composition wherein the primary component is tin oxide. In fact, the composition typically contains at least about 80 wt% tin oxide. Certain compositions may include greater amounts of tin oxide, for example, the composition may include at least about 90 wt%, 95 wt%, or even at least about 98 wt% tin oxide. In accordance with a particular embodiment, tin oxide is present in the composition as a primary component in an amount between about 80 wt% and 98 wt%.

The tin oxide powder used as the primary component may come in various forms, including for example, virgin tin oxide powder and calcined tin oxide powder. Calcined tin oxide has been heat treated and may be referred to as grog or roasted tin oxide. As such, in accordance with one embodiment, the primary component of tin oxide may include a combination of calcined tin oxide and virgin tin oxide powders. Generally, the combination of tin oxide powders includes a minimum amount of virgin tin oxide on the order of at least about 50 wt% of the total weight of the tin oxide powder. In other embodiments, the amount of virgin tin oxide powder within the primary component is greater, such as at least about 60 wt%, at least about 65 wt%, and more particularly, within a range between about 60 wt% and 80 wt% virgin tin oxide.

The amount of calcined tin oxide powder within the primary component of tin oxide powder is typically less than the amount of virgin tin oxide, such as on the order of not greater than about 50 wt% of the total weight of tin oxide powder. Other embodiments, may use lesser amounts of calcined tin oxide, such as not greater than about 30 wt%, not greater than about 20 wt% or within a range between about 5 wt% and about 20 wt%. The calcined tin oxide powder can include minor amounts of other oxide materials (i.e., impurity oxide species) that may be present in amounts of up to 2 wt%. To the extent that other additives are provided, the impurity oxide species present within the calcined tin oxide powder are not accounted for in the compositions described herein.

The composition used to form the bushing block includes at least one additive selected from sintering aids and resistivity modifying species. Corrosion inhibitors are added to the composition to improve the resistance of the final-formed bushing block to attack and erosion by molten glass. In accordance with the present invention, the composition comprises a corrosion inhibitor selected from the group of oxides consisting of ZrO₂ and HfO₂, or a combination thereof.

Certain compositions include the corrosion inhibitor typically in a minor amount, such as not greater than about 4 wt%. In certain other embodiments, the amount of the corrosion inhibitor added to the composition may be less, such as not greater than about 3 wt%, not greater than about 2 wt%, or even not greater than about 1 wt%. In one particular embodiment, the composition includes between about 0.5 wt% and about 4 wt%, and more particularly between about 0.5 and about 2 wt% corrosion inhibitor.

In particular embodiments, the composition utilizes ZrO₂ as the particular corrosion inhibiting species. In such embodiments, the composition typically includes an amount of ZrO₂ of not greater than about 3 wt%, such as less than about 2.5 wt%, and, particularly, within a range between about 1 wt% and 2.25 wt%.

Certain other embodiments may incorporate sintering aids as an additive, which improve formation of the bushing block article by facilitating densification of the article during sintering. Some suitable sintering aids can include oxides, such as CuO, ZnO, Mn₂O₃, CoO, Li₂O, or a combination thereof.

For compositions including one or more sintering aids, the total amount of such additives are present within the composition in a minor amount. For example, suitable amounts of sintering aid can be less than about 1 wt%, such as on the order of not greater than about 0.8 wt%, not greater than about 0.6 wt%, or even not greater than about 0.4 wt%. Certain embodiments utilize a total amount of sintering aid within a range between about 0.1 wt% and about 0.6 wt%, and more particularly within a range between about 0.1 wt% and about 0.4 wt%.

In particular instances, a combination of sintering aids may be used. For example, in one particular embodiment, the composition can include a combination of CuO and ZnO. In such embodiments, it is particularly suitable to use CuO and ZnO. The total amount of the particular combination of CuO and ZnO is not greater than about 1 wt%, such that it can be within a range between about 0.05 wt% and about 0.7 wt%, or even within a range between 0.05 wt% and about 0.5 wt%.

With respect to the individual amounts of CuO and ZnO, generally the composition includes an amount of CuO of less than 0.5 wt%, such as less than 0.4 wt%, or less than 0.3 wt%, and within a range between about 0.05 wt% and about 0.5 wt%. The amount of ZnO in the composition when using the particular combination of ZnO and CuO, is generally less than about 0.3 wt%, less than about 0.2 wt%, or even less than about 0.17 wt%. In certain embodiments, ZnO can be present within a range between 0.05 and about 0.2 wt%.

In certain instances, the body may contain a single sintering aid. For example, some alternative embodiments can use only CuO, such that the composition used to form the final-formed bushing block includes not greater than about 1 wt% CuO. In fact, certain compositions can include amounts of CuO not greater than about 0.8 wt%, not greater than about 0.6 wt%, and particularly within a range between about 0.3 wt% and about 0.8 wt%.

Other compositions can use only Mn₂O₃ as the single sintering aid. Such compositions can include amounts of Mn₂O₃ of not greater than about 1 wt%, such as not greater than about 0.8 wt% or even not greater than about 0.6 wt%. Certain embodiments utilize an amount of Mn₂O₃ within a range between about 0.3 wt% and about 0.8 wt%.

As indicated above, the composition may further include other additives, such as resistivity modifying species. Resistivity modifying species are suitable for modifying the electrical resistivity of the final formed bushing block. As will be described in greater detail below, modifying the electrical resistivity of the bushing block may facilitate the formation of a bushing block having a particular electrical conductivity.

Suitable resistivity modifying species can include oxides, such as Sb₂O₃, As₂O₃, Nb₂O₃, Bi₂O₃, and Ta₂O₅, or a combination thereof. Generally, for composition including a resistivity modifying species, such additives are present in minor amounts. For example, the composition can include not greater than about 2 wt%, or not greater than about 1.5 wt%, not greater than about 1 wt%, or even not greater than about 0.5 wt% of the resistivity modifying species. Certain compositions can include an amount of resistivity modifying species within a range between about 0.25 wt% and 2 wt%, and more particularly within a range between about 0.5 wt% and about 1.5 wt%.

In accordance with one embodiment, Sb₂O₃ is a particularly suitable resistivity modifying species. For compositions utilizing Sb₂O₃ as the resistivity modifying species, the Sb₂O₃ can be present in amount not greater than about 2 wt%, such as not greater than about 1.5 wt%, for example, within a range between about 0.1 wt% and 1.5 wt%, and more particularly within a range between about 0.2 wt% and about 1.2 wt%.

Notably, the composition includes minor amounts of Cr₂O₃. It is particularly desirable for the composition to incorporate small amounts of chromium oxide, since this species has a potential to form hexavalent chrome, which is unsafe and dangerous to humans. As such, the composition generally includes less than about 1 wt% Cr₂O₃. Other compositions may include less, such as not greater than about 0.5 wt%, not greater than about 0.3 wt%, not greater than about 0.2 wt%, or even not greater than about 0.1 wt% Cr₂O₃. Certain embodiments utilize an amount of Cr₂O₃ within a range between about 0.01 wt% and about 0.3 wt%.

The additives can be combined in powder for with the tin oxide powder to form a dry powder mixture. The mixture can then be formed into a green ceramic body by various forming operations including for example, pressing, molding, or in the case of wet mixtures, casting. According to one embodiment, the mixture is pressed, such as by isostatic pressing to form the green ceramic body. After forming the green ceramic body, a final formed bushing block can be made by sintering the green ceramic body at high temperatures, typically on the order of at least about 1400°C until a substantially densified and sintered ceramic body is obtained. After sintering and cooling, the bushing block body can be machined to form holes (i.e., bores) therein such that the bushing block is suitable for use. It will be appreciated, that other process features may be utilized depending upon the forming process, for example, the isostatic pressing can be cold isostatic pressing or can include the application of heat, such that it is hot isostatic pressing.

Referring now to certain characteristics of the tin oxide-based bushing block body, the article is generally formed such that it has a low apparent porosity. For example, the bushing block can be formed such that it has an apparent porosity of not greater than about 4 vol%. In other embodiments, the apparent porosity may be less, such as not greater than about 2 vol%, such as not greater than about 1 vol%, and particularly within a range between about 0.1 vol% and about 2 vol%.

As such, the bushing blocks are particularly dense articles, typically having densities of at least about 6.5 g/cm³. In other instances, the density may be greater, such as at least about 6.55 g/cm³, at least about 6.6 g/cm³, or even at least about 6.65 g/cm³. In one particular embodiment, the bushing block is formed such that its density is within a range between about 6.5 g/cm³ and about 7.0 g/cm³. Formation of such densified articles facilitates formation of a rigid, dense body that is not susceptible to penetration by the molten glass and avoids contamination of the molten glass flowing through the bushing block and release of particles (e.g., stones) from the bushing block body that can result in blocking of holes in the underlying platinum bushing which can disrupt manufacturing.

The tin oxide-based bushing block bodies herein demonstrate superior corrosion resistance when exposed to molten glass at high temperatures, which is suitable for reduced particle generation and reduced contamination of the glass melt flowing through the bushing block. According to one embodiment, the bushing blocks herein have corrosion rates of not greater than about 2 E-5 Kg m⁻² s⁻¹ when exposed to molten glass at 1450°C for 90 hours. In other instances, the corrosion rate is less, such as not greater than about 1.75 E-5 Kg m⁻² s⁻¹, not greater than about 1.5 E-5 Kg m⁻² s⁻¹, or even not greater than about 1.4 E-5 Kg m⁻² s⁻¹. In fact, the corrosion rate is typically within a range between about 0.5 E-5 Kg m⁻² s⁻¹ and about 1.5 E-5 Kg m⁻² s⁻¹ when exposed to molten glass at 1450°C for 90 hours.

The bushing blocks herein have superior intrinsic strength as demonstrated by the MOR (Modulus of Rupture) measured at room temperature. Bushing blocks having suitable intrinsic strength are resistant to mechanical stresses within the body that can result in cracks and potentially failure of the body. In accordance with one embodiment, the bushing block has an intrinsic MOR of not less than about 30 MPa, such as at least about 40 MPa, at least about 50 MPa, or even on the order of at least about 60 MPa. Certain embodiments herein form bushing blocks having an intrinsic MOR within a range between about 50 MPa and about 110 MPa.

In addition to the intrinsic strength of the bushing block, the tin oxide-based bushing block bodies also demonstrate improved thermal shock resistance. Bushing blocks must have suitable thermal shock resistance, as they are exposed to high thermal gradients given that molten glass is flowing through the interior of the bushing block at temperatures in excess of 1000°C, while the exterior surfaces of the bushing block are exposed to ambient temperatures which may be on the order of 600°C. In some instances, thermal gradients between the interior and exterior of the bushing block body may be as great as 800°C.

The tin oxide-based bushing blocks herein generally have a thermal shock resistance of not less than about 60% based upon a MOR value measured after heating the bushing block material to 1000°C for a given duration, and there after quenching the bushing block material. The MOR value of the material after heating and quenching can be compared to (e.g., divided by) the intrinsic MOR value that is measured at room temperature, to provide a percentage that indicates a change in the MOR due to the thermal shock event (i.e., heating and quenching). As such, a thermal shock resistance of 60% indicates a body capable of maintaining 60% of its intrinsic MOR value after being heated and quenched at the specified temperature. In other embodiments, the thermal shock resistance of the bushing blocks is greater, such that it is not less than about 65%, not less than 70%, not less than about 75%, or even not less than about 80% when heated to 1000°C for 30 minutes and quenched. In accordance with a particular embodiment, the thermal shock resistance of bushing block bodies herein is within a range between about 60% and 95%, and, more particularly, within a range between about 70% and 90% when heated to 1000°C for 30 minutes and quenched.

In addition to the characteristics described herein, the tin oxide-based bushing blocks can be formed such that they are electrically conductive to a certain degree. In accordance with one embodiment, the bushing block can have an electrical resistivity of not greater than 1 ohm-cm at temperatures greater than 100°C. In other embodiments, the electrical resistivity can be less, such as not greater than about 0.1 ohm-cm, not greater than about 0.01 ohm-cm, or even not greater than about 0.001 ohm-cm at temperatures greater than 100°C. Particular embodiments may use bushing blocks having electrical resistivities within a range between 0.001 ohm-cm and 1 ohm-cm, and more particularly within a range between about 0.001 ohm-cm and 0.1 ohm-cm at temperatures greater than 100°C.

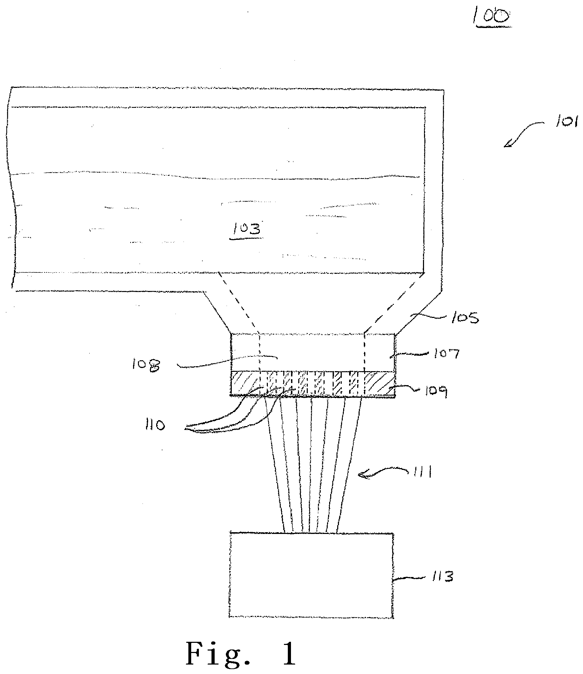

Referring to FIG. 1, a schematic is provided of a direct melt fiber-forming process using a bushing block in accordance with an embodiment. The glass melting tank 100 includes a forehearth 101 where molten glass 103 is contained in preparation for extraction in the form of fibers. As illustrated, the molten glass 103 exits the forehearth through a flow block 105 having a central opening 108 for the flow of the molten glass 103 therethrough. The molten glass 103 flows through an opening 108 extending through the bushing block 107 that is in direct contact with the flow block 105 to allow the molten glass 103 to flow therethrough. While the bushing block 107 is illustrated as having an opening 108, it will be appreciated that different numbers and arrangements of openings can be used depending upon the mechanics of the operation. Upon exiting the bushing block 107, the molten glass 103 flows through a bushing 109 placed under and in direct contact with the bushing block 107. The bushing 109 typically has many small openings 110 extending through the body to facilitate attenuation and drawing of a plurality of glass fibers 111 from the under side of the bushing 109. The glass fibers 111 can be drawn using a fiber winding mechanism 113. Depending upon the size of the operation, the forehearth can include a plurality of bushings 109 and may include a plurality of bushing blocks 107.

During operation, the bushing 109 can be replaced by cooling the molten glass 103 within the forehearth 101. In particular, replacement of the bushing 109 is not as labor intensive as replacement of the bushing block 107 as evident from the arrangement illustrated in FIG. 1. Generally, replacement of the bushing 109 involves cooling the molten glass 103 within the flow block 105 and the bushing block 107 until the glass is solid and the bushing 109 can be safely removed and replaced. The cooling operation generally includes spraying the forehearth area, and particularly the flow block 105 and bushing block 107 with cold water. An operation that causes significant thermal shock to the flow block 105 and bushing block 107.

As can be appreciated, replacement of the bushing block 107 requires more labor, since the molten glass 103 must be either cooled to the point that it is solid with the flow block 105 and in some instances draining of the molten glass 103 from the forehearth 101. Accordingly, replacement of the bushing block 107 can take days or even a week, since the furnace may have to be shut down, the glass drained, parts replaced, and the furnace restarted and the glass reheated.

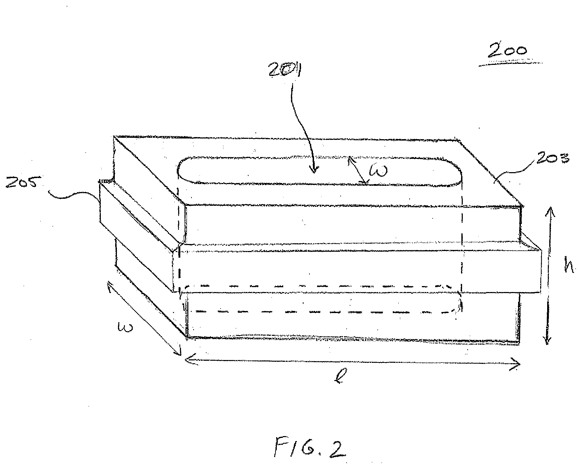

FIG. 2 includes a perspective view of a bushing block in accordance with an embodiment. In particular, the bushing block 200 has a body 203 of a generally rectangular shape including a length (1), a width (w) and a height (h). The bushing block body 203 includes a protrusion 205 extending from the outer surface of the buhing block body 203 and extending around the perimeter of the bushing block 200. The protrusion 205 can aid placement of the bushing block 200 in the forehearth and fixing the bushing block 200 in place.

In accordance with a particular embodiment, the bushing block 200 is shaped such that the length is greater than or equal to the width, and the width is greater than or equal to the height. The bushing block 200 can be a large ceramic article having lengths (1) on the order of at least about 300 mm, such as at least about 400 mm, at least about 600 mm, or even at least about 800 mm. Particular embodiments utilize bushing blocks having lengths within a range between about 400 mm to about 1000 mm. The width (w) can have dimensions on the order of at least about 50 mm, such as at least about 100 mm, at least about 300 mm, or even at least about 400 mm. Particular embodiments utilize bushing blocks having widths within a range between about 100 mm to about 400 mm. The height (h) of the bushing block 200 can have dimensions of at least about 10 mm, such as at least about 20 mm, at least about 50 mm, or even at least about 100 mm. Particular embodiments utilize bushing blocks having thicknesses within a range between about 20 mm to about 100 mm.

As will be appreciated based on the dimensions described above, the bushing block body 203 can have a large volume, thus lending to the large thermal gradients between the interior surfaces and exterior surfaces of the bushing block body 203. In accordance with one embodiment, the bushing block body 203 has a volume of at least about 400 cm³, such as at least about 600 cm³, at least about 800 cm³, or even at least about 1000 cm³. Particular bushing blocks have volumes within a range between about 600 cm³ to about 1000 cm³.

As further illustrated in FIG. 2, the bushing block 200 can have an opening 201 that extends through the body 203 in a direction parallel to the dimension of the height (h). In accordance with a particular embodiment, the opening 201 can be formed such that it has a cross-sectional contour that is circular, elliptical, or oval. Generally, the opening 201 can have dimensions such as a width (w) that is suitable for molten glass to flow through the body 203 of the bushing block. As such, in accordance with one particular embodiment, the opening 201 has a width of at least about 4 cm. In another embodiment, the widths may be greater, such as at least about 8 cm, at least about 10 cm, and particularly within a range between 4 cm and about 20 cm.

### EXAMPLE 1

Table 1 below illustrates corrosion resistance values for 5 samples, Samples A, B, C, D, and E to compare performance of a tin oxide-based bushing block body formed according to compositions herein to conventional bushing block materials and a conventional tin oxide-based electrode body. Sample A includes a tin oxide-based bushing block body formed from a composition in accordance with an embodiment that includes 96.7 SnO₂ (10 wt% calcined and 86.7 wt% virgin) 0.2 wt% ZnO, 0.1 wt% CuO, 1 wt% Sb₂O₃, and 2 wt% ZrO₂. Sample B was formed from a conventional electrode composition including 98.5% SnO₂ and 1.5% other oxide additives. Samples C, D, and E represent conventional bushing block materials. Sample C was formed from a composition including 90 wt% ZrO₂ and HfO₂, 6 wt% SiO₂, 2 wt% Y₂O₃, 0.8 wt% Al₂O₃, 0.6 wt% TiO₂, 0.2 wt% Na₂O, 0.1 wt% Fe₂O₃, and 0.3 wt% other. Sample D was formed from a composition including 69.2 wt% ZrO₂ and HfO₂, 28.8 wt% SiO₂, 1.1 wt% TiO₂, 0.2 wt% Al₂O₃, and 0.6 wt% other. Finally, Sample E was formed from a composition including 91.2 wt% Cr₂O₃, 3.5 wt% ZrO₂, 3.8 wt% TiO₂, and 1.5 wt% other.

Corrosion rate values provided in Table 1 were formulated based upon loss of volume of the sample after exposure to glass at a particular temperature for a particular duration. As such, the volume of each of the samples was measured prior to immersion of the samples within a glass having the composition of 0-10 wt% B₂O₃, 16-25 wt% CaO, 12-16 wt% Al₂O₃, 52-62 wt% SiO₂, 0-5 wt% MgO, 0-2 wt%, alkalies, 0-1.5 wt% TiO₂, 0.05-0.8 wt% Fe₂O₃, and 0-1 wt% fluors. The corrosion rate was tested according to ASTM D578-05. The samples were immersed in the glass at a temperature of 1450°C and held within the glass for a duration of 90 hours. The samples were rotated while immersed within the glass to more accurately recreate the dynamic corrosion conditions experienced within a glass melting furnace, since glass continuously flows through the bushing block body. After exposure of each of the samples to the glass for 90 hours, the samples were removed, their volumes measured, and the corrosion rates were recorded as provide in Table 1.

**Table 1**

| | Corrosion Rate | |
|---|---|---|
| Samples | mm/yr | Kg m-2 s-1 |
| A | 46 | 1.3 E -5 |
| B | 100 | 2.2 E -5 |
| C | 155 | 2.4 E -5 |
| D | 313 | 3.2 E -5 |
| E | 11 | 0.29 E -5 |

As illustrated by the data of Table 1, Sample A demonstrated a lower corrosion rate than all of the samples with the exception of Sample E. In fact, in a comparison of the corrosion rate in the units of mm/year, Sample A demonstrated half of the corrosion rate of the conventional tin oxide-based electrode body and less than three times the corrosion rate of the conventional bushing block materials of Samples C and D. Accordingly, the bushing blocks formed from the compositions herein demonstrate superior corrosion rate over conventional bushing block materials having high zirconia contents. Moreover, while Sample E demonstrated a better corrosion rate in comparison to Sample A, Sample A is free of chromium oxide (not counting trace amounts less than 0.5 wt%), making the bushing block more suitable for handling by humans given the reduced potential for formation of hexavalent chrome. Moreover, Sample A has better glass contact properties, potentially due to smaller surface porosity, making the composition less likely to produce stones within the glass that can damage or break small diameter fibers being drawn.

### EXAMPLE 2

Table 2 below provides data of the intrinsic strength, measured using the MOR as at room temperature for a three-point bending test of the bushing block materials of Samples A, C, D, and E described above in accordance with Example 1. As illustrated by the data in Table 2, Sample A has an intrinsic strength similar to that of Sample D, and over twice as great an intrinsic strength than Sample E. Such an intrinsic strength is suitable for use as a bushing block.

**Table 2**

| | MOR (MPa) | | | Thermal Shock Resistance (%) | |
|---|---|---|---|---|---|
| Samples | RT | 1000°C | 1200°C | 1000°C | 1200°C |
| A | 66.5 | 55.7 | 23.3 | 84 | 35 |
| C | 94.0 | 51.5 | 17.7 | 55 | 19 |
| D | 68.0 | 54.4 | 32.2 | 80 | 47 |

Additionally, data presented in Table 2 further indicates the thermal shock resistance of Sample A as compared to the conventional compositions of Samples C and D. Referring to the thermal shock resistance data provided in Table 2, each of the samples were subject to the temperatures indicated (i.e., 1000°C and 1200°C) for a period of 30 min, and after which, each of the samples were quenched. The quenching process was conducted by exposing the samples to ambient air for cooling immediately after heating. As illustrated by the data of Table 2, after undergoing a thermal shock process at 1000°C, Sample A demonstrated a small reduction of 16%, thus maintaining 84% of its intrinsic strength. The other samples, primarily Samples C and D demonstrated poorer performance, having greater reductions in strength and having poorer thermal shock resistance. As further illustrated by the data of Table 2, after conducting the thermal shock resistance test at a temperature of 1200°C, the material of Sample A demonstrated a greater decrease in strength. However, this reduction in strength is commensurate with sample D, which is greater than the reduction in strength of Sample C, providing evidence that the composition of Sample A is suitable for use as a bushing block material.

The data provided above in Examples 1 and 2 demonstrate that compositions disclosed in the embodiments herein are suitable for forming bushing blocks. In fact, the compositions herein demonstrate a combination of corrosion resistance and thermal shock resistance that is superior to conventional zirconia-containing materials. The use of new low-boron content glasses in the past few years has led to increases in the forming temperatures of the glass in the forehearth and thus in the bushing blocks. The temperature of the glass in contact with the bushing block is often increased by 100°C or more and thus the corrosion rate of the standard zircon-based material is dramatically reduced. While chromia-based ceramics have suitable corrosion resistant properties, such materials have considerable drawbacks, including the potential to form harmful hexavalent chrome in the presence of certain alkali compositions at high temperatures (>1000°C). Additionally, chromia-based compositions have poor glass contact properties, and are more likely to produce stones or inclusions within the molten glass that can hamper glass fiber forming processes especially for the production of very fine fibers (15 µm or less).

The tin oxide-based compositions of bushing blocks described in connection with embodiments herein represent a departure from the state-of-the-art. Typical bushing blocks are made of zirconia-based, zircon-based, or chromia-based compositions, wherein zirconium or chromium are the major components. While chromia-based bushing blocks demonstrate suitable thermal properties, the potential of these compositions to form hexavalent chrome make them hazardous and particularly undesirable for continued use in the industry. Zirconia-based and zircon-based compositions have also been used in bushing blocks, and while such materials have refractory characteristics these compositions are not as capable as chromia-based compositions. Accordingly, zirconia-based and zircon-based bushing blocks require regular maintenance and more frequent replacement in comparison to chromia-based bushing block materials. While tin oxide-based compositions have been utilized, such uses have been generally limited to electrode applications for glass melting, which requires notably distinct material properties than those material properties required by bushing blocks.

The above-disclosed subject matter is to be considered illustrative, and not restrictive. Thus, the scope of the present invention is to be determined by the following claims, and shall not be restricted or limited by the foregoing detailed description.

## Claims

1. A refractory article comprising:
a bushing block (107, 200) having a body comprising an opening (108, 201) extending through the body (203), wherein the bushing block is formed from a composition comprising:
a primary component comprising tin oxide; and
at least one additive selected from the group of additives consisting of a sintering aid, a resistivity modifying species, or a combination thereof;
**characterized in that** the composition further comprises a corrosion inhibitor selected from the group of oxides consisting of ZrO₂ and HfO₂, or a combination thereof.

2. The refractory article of claim 1, wherein tin oxide comprises at least about 80 wt% of the composition.

3. The refractory article of claim 1, wherein the composition comprises not greater than about 4 wt% of the corrosion inhibitor.

4. The refractory article of claim 1, wherein the sintering aid is an oxide, in particular an oxide selected from the group of oxides consisting of CuO, ZnO, Mn₂O₃, CoO and Li₂O, or a combination thereof.

5. The refractory article of claim 1, wherein the composition comprises not greater than about 1 wt% of the sintering aid.

6. The refractory article of claim 1, wherein the resistivity modifying species comprises an oxide selected from the group of oxides consisting of Sb₂O₃, As₂O₃, Nb₂O₃, Bi₂O₃, and Ta₂O₅ or a combination thereof.

7. The refractory article of claim 6, wherein the composition comprises an amount of the resistivity modifying species within a range between about 0.5 wt% and about 1.5 wt%.

8. The refractory article of claim 1, wherein the composition comprises Sb₂O₃ in an amount of not greater than about 2 wt%.

9. The refractory article of claim 1, wherein the opening (108, 201) has a cross-sectional shape selected from the group of shapes consisting of circular, elliptical, and oval.

10. The refractory article of claim 1, wherein the bushing block body (203) comprises a thermal shock resistance of not less than about 60% based on a MOR value after heating to 1000°C and quenching as compared to an intrinsic MOR value measured at room temperature.

11. The refractory article of claim 2, wherein tin oxide comprises not greater than about 98 wt% of the composition.

12. The refractory article of claim 1, wherein the composition comprises not greater than about 1 wt% Cr₂O₃.

## Patentansprüche

1. Feuerfester Gegenstand umfassend:
einen Hülsenblock (107, 200), aufweisend einen Körper umfassend eine Öffnung (108, 201), welche sich durch den Körper (203) erstreckt, wobei der Hülsenblock aus einer Zusammensetzung gebildet ist, umfassend:
eine primäre Komponente, umfassend Zinnoxid; und
zumindest ein Additiv, ausgewählt aus der Gruppe von Additiven bestehend aus einem Sinterhilfsmittel, einer resistivitäts- modifizierenden Spezies, oder einer Kombination davon;
**dadurch gekennzeichnet, dass** die Zusammensetzung des Weiteren einen Korrosionsinhibitor umfasst, ausgewählt aus der Gruppe von Oxiden bestehend aus ZrO₂ und HfO₂, oder einer Kombination davon.

2. Feuerfester Gegenstand nach Anspruch 1, wobei Zinnoxid zumindestens etwa 80 Gewichtsprozent von der Zusammensetzung umfasst.

3. Feuerfester Gegenstand nach Anspruch 1, wobei die Zusammensetzung nicht mehr als etwa 4 Gewichtsprozent des Korrosionsinhibitors umfasst.

4. Feuerfester Gegenstand nach Anspruch 1, wobei das Sinterhilfsmittel ein Oxid ist, insbesondere ein Oxid, ausgewählt aus der Gruppe von Oxiden bestehend aus CuO, ZnO, Mn₂O₃, CoO und Li₂O, oder einer Kombination davon.

5. Feuerfester Gegenstand nach Anspruch 1, wobei die Zusammensetzung nicht mehr als etwa 1 Gewichtsprozent des Sinterhilfsmittels umfasst.

6. Feuerfester Gegenstand nach Anspruch 1, wobei die resistivitätsmodifizierenden Spezies ein Oxid umfasst, ausgewählt aus der Gruppe von Oxiden bestehend aus Sb₂O₃, As₂O₃, Nb₂O₃, Bi₂O₃, und Ta₂O₅, oder einer Kombination davon.

7. Feuerfester Gegenstand nach Anspruch 6, wobei die Kombination eine Menge von der resistivitätsmodifizierenden Spezies umfasst innerhalb eines Bereichs zwischen etwa 0,5 Gewichtsprozent und etwa 1,5 Gewichtsprozent.

8. Feuerfester Gegenstand nach Anspruch 1, wobei die Zusammensetzung Sb₂0₃ in einer Menge von nicht mehr als etwa 2 Gewichtsprozent umfasst.

9. Feuerfester Gegenstand nach Anspruch 1, wobei die Öffnung (108, 201) eine Querschnittsform aufweist, ausgewählt von der Gruppe von Formen bestehend aus kreisförmig, elliptisch und oval.

10. Feuerfester Gegenstand nach Anspruch 1, wobei der Hülsenblockkörper (203) eine Temperaturwechselbeständigkeit von nicht weniger als etwa 60%, basierend auf einen MOR-Wert nach dem Erwärmen auf 1000 °C und eine Abschreckung im Vergleich zu einem intrinsischen MOR-Wert gemessenen bei Raumtemperatur, umfasst.

11. Feuerfester Gegenstand nach Anspruch 2, wobei Zinnoxid nicht mehr als etwa 98 Gewichtsprozent von der Zusammensetzung enthält.

12. Feuerfester Gegenstand nach Anspruch 1, wobei die Zusammensetzung nicht mehr als etwa 1 Gewichtsprozent Cr₂O₃ umfasst.

## Revendications

1. Article réfractaire comprenant :
un bloc manchon (107, 200) ayant un corps comprenant une ouverture (108, 201) s'étendant à travers le corps (203), dans lequel le bloc manchon est formé d'une composition comprenant :
un composant principal comprenant de l'oxyde d'étain ; et
au moins un additif choisi dans le groupe d'additifs constitué d'un auxiliaire de frittage, d'un matériau modificateur de résistivité, ou d'une de leurs combinaisons ;
**caractérisé en ce que** la composition comprend en outre un inhibiteur de corrosion choisi dans le groupe d'oxydes constitué de ZrO₂ et HfO₂, ou d'une de leurs combinaisons.

2. Article réfractaire selon la revendication 1, dans lequel l'oxyde d'étain comprend au moins environ 80 % en poids de la composition.

3. Article réfractaire selon la revendication 1, dans lequel la composition ne comprend pas plus d'environ 4 % en poids de l'inhibiteur de corrosion.

4. Article réfractaire selon la revendication 1, dans lequel l'auxiliaire de frittage est un oxyde, en particulier un oxyde choisi dans le groupe d'oxydes constitué de CuO, ZnO, Mn₂O₃, CoO et Li₂O, ou d'une de leurs combinaisons.

5. Article réfractaire selon la revendication 1, dans lequel la composition ne comprend pas plus d'environ 1 % en poids de l'auxiliaire de frittage.

6. Article réfractaire selon la revendication 1, dans lequel le matériau modificateur de résistivité comprend un oxyde choisi dans le groupe d'oxydes constitué de Sb₂O₃, As₂O₃, Nb₂O₃, Bi₂O₃ et Ta₂O₅, ou d'une de leurs combinaisons.

7. Article réfractaire selon la revendication 6, dans lequel la composition comprend une quantité du matériau modificateur de résistivité dans une plage comprise entre environ 0,5 % en poids et environ 1,5 % en poids.

8. Article réfractaire selon la revendication 1, dans lequel la composition comprend du Sb₂O₃ en quantité qui n'est pas supérieure à environ 2 % en poids.

9. Article réfractaire selon la revendication 1, dans lequel l'ouverture (108, 201) a une forme en coupe transversale choisie dans le groupe de formes constitué des formes circulaire, elliptique et ovale.

10. Article réfractaire selon la revendication 1, dans lequel le corps (203) du bloc manchon comprend une résistance aux chocs thermiques qui n'est pas inférieure à environ 60 % sur la base d'une valeur MOR après chauffage à 1 000 °C et trempe en comparaison d'une valeur MOR intrinsèque mesurée à température ambiante.

11. Article réfractaire selon la revendication 2, dans lequel l'oxyde d'étain ne comprend pas plus d'environ 98 % en poids de la composition.

12. Article réfractaire selon la revendication 1, dans lequel la composition ne comprend pas plus d'environ 1 % en poids de Cr₂O₃.
